# EUROPÄISCHE PATENTSCHRIFT

(11) **EP 0 601 504 B1**
(45) Veröffentlichungstag und Bekanntmachung des Hinweises auf die Patenterteilung: **20.08.1997**
(21) Anmeldenummer: 93119568.9
(22) Anmeldetag: 04.12.1993
(51) Int. Cl.: C25D 21/22, B01J 20/34

(54) **Verfahren zur Verlängerung der Nutzungsdauer von Elektrolytlösungen durch Eliminierung organischer Störstoffe**
Process for prolonging the useful life of electrolyte solutions by eliminating noxious organic compounds
Procédé pour prolonger la durée de vie des solutions électrolytiques par élimination des composés organiques nuisibles

(30) Priorität: 11.12.1992 DE 4241867; 27.08.1993 DE 4328876
(43) Veröffentlichungstag der Anmeldung: 15.06.1994
(73) Patentinhaber: Hahnewald GmbH, 01189 Dresden (DE)
(72) Erfinder: Lieber, Hans-Wilhelm, Prof. Dr., D-14129 Berlin (DE); Fischwasser, Klaus, Prof. Dr., D-01326 Dresden (DE); Fenk, Bernd, Dipl.-Ing., D-01324 Dresden (DE); Hahnewald, Dieter, Dipl.-Ing., D-01259 Dresden (DE); Dr. Müller, Jens, D-01187 Dresden (DE)
(74) Vertreter: Uhlemann, Henry, Dipl.-Chem.

(56) Entgegenhaltungen:
- WO-A-93/11186
- DD-A- 280 560
- US-A- 3 707 447
- DATABASE WPI Week 7727, Derwent Publications Ltd., London, GB; AN 77-47546Y & JP-A-52 062 136 (KOSAKU KK) 23. Mai 1977
- PLATING Bd. 59, Nr. 11 , November 1972 , US Seiten 1033 - 1037 WU 'automatic purification of coumarin-containing nickel plating baths'
- PATENT ABSTRACTS OF JAPAN vol. 13, no. 273 (C-609)22. Juni 1989 & JP-A-01 067 253 (CANON INC) 13. März 1989
- METAL FINISHING ABSTRACTS Bd. 19, Nr. 3 , Mai 1977 , US Seite 129 KUBO 'removal of first brightener in nickel plating solution' and J. METAL FINISHING SOC., JAPAN, Bd. 28, Nr. 2, 1977

## Beschreibung

Die Erfindung betrifft ein Verfahren zur Verlängerung der Nutzungsdauer von Elektrolytlösungen, vornehmlich von Prozeßlösungen in der Galvano- und Leiterplattentechnik, wo vorzugsweise chemische, autokatalytische und galvanische Behandlungslösungen bei der Beschichtung von Metallen, nichtleitenden Substraten und Leiterplatten zur Anwendung kommen, durch Eliminierung organischer Störstoffe.

Bei der Herstellung von galvanischen Metallüberzügen und Metallfolien werden schwermetallhaltige Elektrolytlösungen verwendet, denen zum Erzielen von bestimmten Oberflächeneigenschaften (Glanz, Duktilität, Zugfestigkeit usw.) diverse organische Verbindungen zugesetzt werden können. Diese organischen Stoffe unterliegen während des Abscheidungsprozesses chemische Veränderungen, so daß Störstoffe entstehen, die bei einer verlustfreien Prozeßführung bzw. bei einer vollständigen Rückführung der prozeßbedingten Elektrolytverschleppungen in die Prozeßstufe zu Prozeßstörungen führen würden. Die Anreicherung organischer Störstoffe in Elektrolytlösungen kann auch durch Eintrag von Störstoffen erfolgen.

Eine bekannte Lösung zur Entfernung von organischen Störstoffen stellt die Adsorbtion an Aktivkohle und die Oxidation mittels Wasserstoffperoxid bzw. Kaliumpermanganat dar. Durch diese Vorgehensweise sind jedoch nicht alle Bestandteile der organischen Störstoffe aus dem Aktivbad entfernbar.

Nachteile des Aktivkohle-Einsatzes sind ferner die hohen Schwermetallverluste (bis 20 % je Regenerierung) sowie die Adsorbensverluste. Beladene Aktivkohle stellt aufgrund der Schwermetallbeladung und der schwierigen Regenerierbarkeit Sonderabfall dar. Der Einsatz von Oxidationsmitteln fördert in vielen Fällen sogar die Störstoffanreicherung.

Die JP-A-6467253 beschreibt ein Verfahren zur Reaktivierung von verbrauchter Aktivkohle, welche mit gelbildenden organischen Produkten aus der Wasseraufbereitung verunreinigt ist, mit Wasserstoffperoxid und NaOH.

Eine andere Verfahrensvariante zur Eliminierung organischer Störstoffe aus galvanischen Elektrolytlösungen geht von der Öffnung des internen Stoffkreislaufes aus und beinhaltet die Verfahrensstufen Schwermetallfällung im Spülwasser als Hydroxid, Sedimentation des Schwermetallhydroxidschlammes, Entwässerung durch Filtration, Wiederauflösung mit Schwefelsäure, Rückführung der Elektrolytlösung in das galvanische Prozeßbad oder zur Gewinnungselektrolyse mit kathodischer Schwermetallabscheidung und -rückgewinnung, anodische Rückgewinnung der Schwefelsäure für die Schlammauflösung. Die organischen Störstoffe verbleiben nach der Schwermetallfällung und Schlammabtrennung im Filtrat, so daß eine Anreicherung im galvanischen Elektrolyt unterbunden werden kann (Galvanotechnik 71 (1980) 7, 712 720).

Eine weitere Verfahrensvariante geht ebenfalls von der Öffnung des internen Stoffkreislaufes aus und beinhaltet die Verfahrenskombination Ionenaustausch-Gewinnungselektrolyse. Das elektrolytbelastete Spülwasser gelangt über den Ionenaustauscher zur Abtrennung der Organik von den Schwermetallionen. Die Organik verbleibt im aufbereiteten Spülwasser und wird dadurch aus der Elektrolytlösung entfernt, während die schwermetallhaltigen Ionenaustauschereluate entweder in die Elektrolytlösung zurückgeführt oder mit Hilfe der Gewinnungselektrolyse auf Metall aufgearbeitet werden (Acta hydrochim et hydrobiol. 12 (1984) 2, 183.202).

Alle oben erwähnten Regeneriervarianten haben den Nachteil, daß viel zu hohe Stoffverluste auftreten und stellen deshalb keine Problemlösung im Sinne schadstoffarmer Prozeßtechniken dar.

In Metal Finishing Abstract, Bd. 19, Nr. 3, S. 129 "Removal of brighter in nickel platin solution" wird über die Entfernung von DTI mittels eines speziellen Adsorberpolymers, nämlich Amberlit XAD-7 aus Nickelelektrolyten berichtet.

Die DD 280 560 A1 beinhaltet ein Verfahren zur Regenerierung von unbrauchbaren Prozeßlösungen der oberflächenveredelnden Industrie. Dabei werden verbrauchte Prozeßlösungen mit einem makroporösen organischen Polymer behandelt und anschließend die adsorbierten Organika durch Spülen mit organischen Lösungsmitteln desorbiert. Dann erfolgt die stufenweise Elution des Regenerates unter Erhalt organikareicher und -armer Fraktionen.

Das Ziel der Erfindung ist ein Verfahren zur Eliminierung von organischen Störstoffen aus Elektrolytlösungen zur Verlängerung deren Nutzungsdauer und zur Minimierung von Abwasser und Abfällen. Die Entfernung der Störstoffe soll mit regenerierbaren Adsorberpolymeren erfolgen, wobei organische Lösungsmittel als Regeneriermittel für die beladene Adsorberpolymere auszuschließen sind.

Der Erfindung liegt die Aufgabe zugrunde, ein Verfahren zur Verlängerung der Nutzungsdauer von Elektrolytlösungen durch Eliminierung organischer Störstoffe mit regenerierbaren Adsorberpolymeren bereitzustellen. Nach der adsorptiven Störstoff-Eliminierung muß die Elektrolytlösung uneingeschränkt weiter nutzbar sein. Entscheidende Voraussetzung für eine Verfahrensanwendung ist die vollständige Regenerierung der Adsorberpolymere mit wässrigen Lösungen.

Gelöst wird diese Aufgabe durch die Lehre der Patentansprüche. Überraschenderweise wurde gefunden, daß durch eine oxidative Vorbehandlung der beladenen Adsorberpolymere, beispielsweise mit einer verdünnten Wasserstoffperoxid-Lösung die Adsorpte strukturell so verändert werden, daß anschließend mit einer alkalischen Lösung, beispielsweise einer verdünnten Natronlauge und nur einer Regenerierstufe zuverlässig eine vollständige Regenerierung der Adsorberpolymere ermöglicht wird. Die Behandlung kann ebenfalls einstufig durch Kontakt mit einer alkalischen wäßrigen Lösung eines Oxidationsmittels erfolgen. Als Oxidationsmittel können neben Wasserstoffperoxid-Lösungen auch wasserlösliche Peroxosulfate oder Peroxodisulfate eingesetzt werden.

### Beispiel 1

Ein mit organischen Störstoffen hochbelasteter Vernickelungselektrolyt (Total Organic Carbon = 25,5 g_{c}/l, Nickel-Konzentration = 95,9 g/l), der bedingt durch die hohe Organik-Konzentration keine Funktionstüchtigkeit mehr besaß, wurde mit Hilfe von Adsorberpolymeren regeneriert. Die adsorptive Regenerierung des galvanischen Vernickelungselektrolyten erfolgte mit dem Adsorberpolymer (Ethylvinylbenzen-Divinylbenzen-Copolymerisat ohne polare Gruppen (Wofatit EP 61)) im Säulenverfahren im Abstrom mit einer Fließgeschwindigkeit von ca. 2,5 m/h. Der Säleninnendurchmesser betrug ca. 3 cm, die Schütthöhe des Adsorberpolymers ca. 70 cm. Es wurden unverdünnter Elektrolyt und die Verdünnung Elektrolyt : Wasser = 1 : 5 untersucht. Die Beladung der Adsorptionssäule wurde bis zur Ausnutzung der GVK durchgeführt. Die GVK ist die Gesamtvolumenkapazität des Adsorberpolymers für die Gesamtorganik (GO), d. h. Summe Einsatzorganik + gebildete bzw. eingetragene Fremdorganik, ausgedrückt als organisch gebundener Kohlenstoff in g_{c}/l_{Adsorber}. Die Bestimmung der GVK erfolgt durch Auswertung von Durchbruchskurven unter der Bedingung, daß die Beladung der Adsorptionssäule bis TOC_{zulauf} = TOC_{ablauf} erfolgt.

Es wurden folgende Ergebnisse erreicht:
GVK bei der Regenerierung des unverdünnten Elektrolyten: ca. 63 g_{c}/l_{Adsorber}
GVK bei der Regenerierung des 1 : 5 verdünnten Elektrolyten: ca. 37 g_{c}/_{Adsorber}

Durch die Regenerierung des Elektrolyten wurde der TOC von 25,5 g_{c}/l auf 10,4 g_{c}/l abgesenkt.

Nach der Regenerierung des Elektrolyten erfolgte eine Korrektur der Einsatzorganik entsprechend der Firmen-Rezeptur. Anschließende Untersuchungen in der Hull-Zelle zeigten, daß der Elektrolyt wieder uneingeschränkt einsetzbar war.

### Beispiel 2

Eine mit dem Adsorberpolymer Ethylvinylbenzen-Divinylbenzen-Copolymerisat ohne polare Gruppen (Wofatit EP 61) gefüllte Säule (Innendurchmesser der Säule: 0,9 cm; Schütthöhe des Adsorberpolymers: 16 cm) wurde mit nicht mehr funktionstüchtigen galvanischen Vernickelungselektrolyten (TOC = 4,8 g_{c}/l, Nickel-Konzentration = 78,1 g/l) beschickt. Die Beladung erfolgte im Abstrom mit einer Fließgeschwindigkeit von ca. 2,5 m/h bis zum Erreichen der GVK.

Die Regenerierung des beladenen Adsorberpolymers erfolgte in der gleichen Säule nach folgendem Regenerierschema:
1. Rückspülen der Säule mit Wasser, bis kein Nickel mehr im Waschwasser nachweisbar ist (Fließgeschwindigkeit 3 m/h).
2. Behandlung des Adsorberpolymers mit 5 Bettvolumina einer ca. 2,5 %igen Wasserstoffperoxid-Lösung im Abstrom und Kreislaufbetrieb (Fließgeschwindigkeit ca. 1,7 m/h; Dauer max 1 h).
3. Waschen mit Wasser, bis kein Wasserstoffperoxid im Waschwasser nachweisbar ist.
4. Behandlung des Adsorberpolymers mit 5 Bettvolumina einer ca. 6%igen Natronlauge im Abstrom und Kreislaufbetrieb (Fließgeschwindigkeit: ca. 1,7 m/h, Dauer max. 1 h).
5. Waschen mit Wasser, bis das Waschwasser alkalifrei ist. Anschließend erfolgt die erneute Beladung des Adsorberpolymers. Die GVK blieb während der untersuchten fünf Zyklen konstant und betrug jeweils ca 16 g_{c}/l_{Adsorber}.

## Patentansprüche

1. Verfahren zur Verlängerung der Nutzungsdauer von Prozeßlösungen der Oberflächenveredlung durch Eliminierung von organischen Störstoffen unter Anwendung von Adsorberpolymeren, dadurch gekennzeichnet, daß
a) das Adsorberpolymer mit der mit organischen Störstoffen belasteten Elektrolytlösung in Kontakt gebracht wird,
b) das mit organischen Störstoffen beladene Adsorberpolymer mit Wasser gespült und
c) danach mit einer wäßrigen Lösung eines Oxidationsmittels behandelt
d) sowie gegebenenfalls anschließend mit Wasser gespült,
e) mit einer wäßrigen alkalischen Lösung behandelt und
f) gegebenenfalls anschließend mit Wasser gespült
wird.

2. Verfahren nach Anspruch 1, dadurch gekennzeichnet, daß das mit organischen Störstoffen beladene und mit Wasser gespülte Adsorberpolymer mit einer alkalischen wässrigen Lösung eines Oxidationsmittels behandelt und anschließend mit Wasser gespült wird.

3. Verfahren nach Anspruch 1 und 2, dadurch gekennzeichnet, daß als Oxidationsmittel eine Wasserstoffperoxid und/oder Peroxosulfate bzw. Peroxodisulfate enthaltende wäßrige Lösung eingesetzt wird.

4. Verfahren nach Anspruch 1 und 2, dadurch gekennzeichnet, daß die alkalische wäßrige Lösung Natron- oder Kalilauge im Konzentrationsbereich 2 bis 10 % ist.

5. Verfahren nach Anspruch 1, dadurch gekennzeichnet, daß zur Erreichung der Wiedereinsetzung der bei der Regenerierung der Adsorberpolymere anfallenden organikahaltigen Regenerate die desorbierten organischen Störstoffe in einem Redoxprozeß mittels UV/Oxidationsmittelbehandlung mineralisiert werden.

## Claims

1. Procedure for prolonging the effective usage of electrolyte solutions in surface refinement by elimination of organical interfering substances using adsorbing polymers characterized by the fact that:
a) the adsorbing polymer is brought into contact with the electrolyte solution, polluted with organic interference substances
b) the adsorbing polymer, enriched with organic interference substances is rinsed with water
c) after that treated with a hydrous solution of an oxidizer
d) and, if necessary, rinsed with water again
e) treated with a hydrous alkaline solution
f) and, if necessary, rinsed with water again.

2. Procedure according to claim 1, characterized by the fact that the adsorbing polymer, enriched with organic interference substances and rinsed with water, is treated with a hydrous alkaline solution of an oxidizer and subsequently rinsed with water.

3. Procedure according to claims 1 and 2, characterized by the fact that the hydrous solution used contains an oxidizer, namely hydrogen-peroxide and/or peroxo-sulphate or peroxo-disulphate.

4. Procedure according to claims 1 and 2, characterized by the fact that the hydrous alkaline solution is a sodium-hydroxide one or potash lye with a concentration of 2 to 10%.

5. Procedure according to claim 1, characterized by the fact that the desorbed organic interference substances, which are obtained in the regeneration process of the adsorbing polymer, are mineralized in a redox process using UV/oxidizing agents.

## Revendications

1. Procédé de prolongation de la durée d'utilisation de solutions visant à épurer les surfaces par élimination de matières organiques parasites par l'utilisation de polymères adsorbants est caractérisé par le fait que:
a) le polymère adsorbant est porté au contact de la solution électrolytique chargée de matières organiques parasites,
b) le polymère chargé de matières organiques parasites est rincé à l'eau et
c) ensuite traité au moyen d'une solution aqueuse d'un agent oxydant
d) est ensuite de même, le cas échéant, rincé à l'eau
e) est traité au moyen d'une solution aqueuse alcaline
f) le cas échéant est ensuite rincé à l'eau.

2. Procédé selon la revendication 1, caractérisé en ce que la polymère chargé de matières parasites organiques et rincé à l'eau est traité au moyen d'une solution aqueuse alcaline d'un agent oxydant et ensuite rincé à l'eau.

3. Procédé selon la revendication 1, caractérisé en ce qu'une solution aqueuse à base de peroxyde hydrogéné et/ou peroxosulfate ou respectivement de peroxidisulfate fait fonction d'oxydant.

4. Procédé selon la revendication 1 et 2, caractérisé en ce que toute la solution aqueuse alcaline est une solution à concentration de 2 à 10 % de soude caustique ou de potasse.

5. Procédé selon la revendication 1, caractérisé en ce que pour obtenir la récupération des produits contenant des matières organiques attaqués lors de la régénération des polymères adsorbants, les matières organiques parasites sont minéralisées par un procédé redox au moyen d'un agent d'oxydation/ UV.
